# FASCICULE DE BREVET EUROPEEN

(11) **EP 4 128 717 B1**
(45) Date de publication et mention de la délivrance du brevet: **12.03.2025**
(21) Numéro de dépôt: 21716509.1
(22) Date de dépôt: 22.03.2021
(51) Int. Cl.: H04L 67/563, H04L 9/32, H04L 61/4511, H04L 9/40, H04L 67/02, H04L 61/58

(54) **DÉLÉGATION D'UNE FONCTION DE RÉSOLUTION D'IDENTIFIANTS DE NOMMAGE**
DELEGATION EINER FUNKTION ZUR AUFLÖSUNG VON NAMENSBEZEICHNERN
DELEGATION OF A FUNCTION FOR THE RESOLUTION OF NAMING IDENTIFIERS

(30) Priorité: 24.03.2020 FR 2002880
(43) Date de publication de la demande: 08.02.2023
(73) Titulaire: Orange, 92130 Issy-les-Moulineaux (FR)
(72) Inventeur: STEPHAN, Emile, 92326 CHÂTILLON CEDEX (FR); FROMENTOUX, Gaël, 92326 CHÂTILLON CEDEX (FR); FIEAU, Frédéric, 92326 CHÂTILLON CEDEX (FR)
(74) Mandataire: Vidon Brevets & Stratégie
(86) Numéro de dépôt international: PCT/FR2021/050467
(87) Numéro de publication internationale: WO 2021/191536

(56) Documents cités:
- WO-A1-2018/130796
- US-A1- 2017 048 186
- US-A1- 2017 126 616

## Description

### Domaine de l'invention

Le domaine de l'invention est celui de la résolution d'identifiants de nommage tels que des noms de domaines. Plus précisément, l'invention concerne la délégation d'une fonction de résolution d'identifiants de nommage, normalement exécutée par des résolveurs d'identifiants de nommage, à des serveurs dont ce n'est pas la fonction, tels que des serveurs hébergeant des ressources auxquels des terminaux peuvent accéder via un navigateur Internet.

### Art antérieur et ses inconvénients

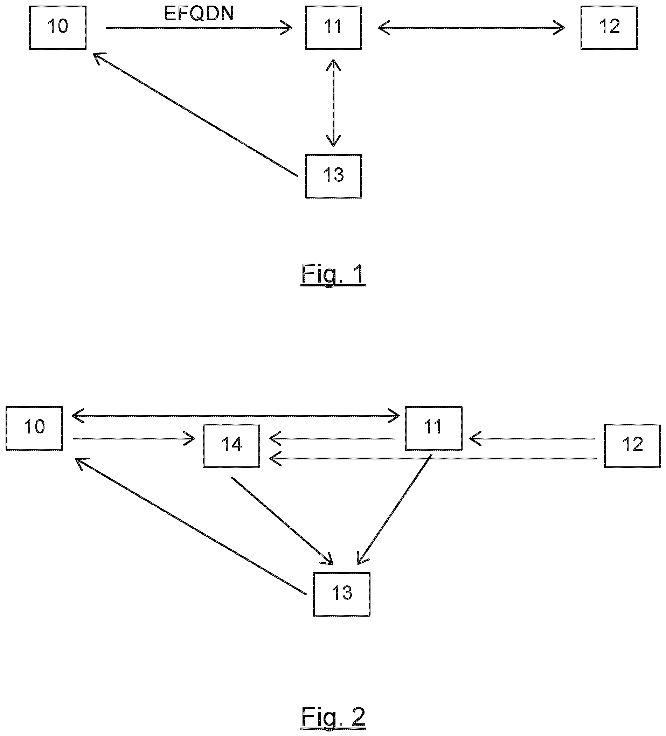

La **[****Fig. 1****]** représente un exemple de scenario de résolution d'identifiants de nommage. Un terminal 10 émet une requête de résolution d'identifiants de nommage chiffrée EFQDN (en anglais *external fully qualified domain nome*) à destination d'un résolveur d'identifiants de nommage public 11 géré par une société tierce. Le résolveur public 11 obtient alors de la part d'un serveur autoritaire 12 associé avec un identifiant de nommage des adresses réseau, telles que par exemple des adresses IP (*Internet Protocol*) de type IPv4 ou IPv6, associées à des serveurs 13 associés à l'identifiant de nommage à résoudre, ces serveurs 13 stockant des données relatives à la mise œuvre d'un service requis par le terminal 10 tel que des données relatives à une page web ou des données relatives à un contenu téléchargeable, etc. De tels serveurs 13 sont situés dans un réseau tiers distinct qui n'est pas géré par un fournisseur de service internet ISP (en anglais *Internet Service Provider)* auprès duquel un utilisateur du terminal 10 a souscris une offre de service.

Une fois en possession des adresses IP *(Internet Protocol)* associées aux serveurs 13, le résolveur public 11 transmet au moins l'une des adresses IP associées aux serveurs 13 à le terminal 10. Le terminal 10 établit alors une connexion avec le serveur 13 correspondant et peut accéder aux données relatives à la mise œuvre du service requis.

Dans ce scenario, les serveurs 13 associés à un identifiant de nommage à résoudre sont sélectionnés par l'entreprise tierce qui gère les serveurs autoritaires 12 sans concertation avec le fournisseur de service internet ISP auprès duquel un utilisateur du terminal 10 a souscris une offre de service.

Cela impacte la gestion des ressources des différents équipements de communication, gérés par le fournisseur de service internet ISP auprès duquel un utilisateur du terminal 10 a souscris une offre de service et impliqués dans la résolution d'identifiants de nommage qui peuvent ne pas être utilisés de manière optimale.

Il existe donc un besoin d'une technique de résolution d'identifiants de nommage présentant pas tout ou partie des inconvénients précités. US 2017/048186 A1 décrit un système permettant de déléguer, à des fournisseurs supplémentaires, la fourniture d'enregistrements DNS dans lequel la résolution de noms de domaine pour certains types d'enregistrements est déléguée d'un fournisseur de services DNS faisant autorité à un ou plusieurs fournisseurs de services DNS supplémentaires.

### Exposé de l'invention

L'invention répond à ce besoin en proposant un procédé de résolution d'au moins un identifiant de nommage tel que revendiqué dans la revendication 1.

Une telle solution permet à une société tierce qui le souhaite de déléguer la résolution d'identifiants de nommage effectuée par défaut par des résolveurs d'identifiants de nommage, dont la société tierce assure la gestion, à des serveurs hébergeant des ressources, tels que des serveurs web, gérés par exemple par un fournisseur de service internet.

La délégation de la résolution d'identifiants de nommage à des serveurs hébergeant des ressources permet de réduire les coûts liés à l'exécution de cette fonction de résolution d'identifiant de nommage. En effet, en délégant la résolution d'identifiants de nommage à un serveur hébergeant des ressources il est possible de réduire le nombre de connexions entre équipements de communication afin de résoudre un identifiant de nommage, notamment en réutilisant les connections existantes entre les équipements utilisateur et les serveurs hébergeant des ressources. Une telle réduction du nombre de connexions entre équipements de communication entraine une réduction de la consommation énergétique de ces équipements de communication.

De plus, une telle solution de délégation de la résolution d'identifiants de nommage présente également des performances accrues. Cela tient au fait que le nombre de connexions établies entre équipements de communication afin de résoudre un identifiant de nommage est réduit.

Enfin, la solution de délégation de la résolution d'identifiants de nommage proposée est fiable. En effet, dans le cadre du procédé de résolution de nommage décrit, un serveur hébergeant des ressources mettant en œuvre une résolution d'identifiants de nommage à la place d'un résolveur d'identifiants de nommage est doté d'une autorisation d'exécution de cette fonction de résolution d'au moins un identifiant de nommage qui peut être vérifiée le cas échéant.

Selon une caractéristique particulière du procédé de résolution d'identifiants de nommage, le paramètre de délégation est une empreinte numérique de l'identifiant de nommage associé audit serveur hébergeant des ressources signée par une clé cryptographique associée à un serveur autoritaire associé à au moins un identifiant de nommage.

Le paramètre de délégation est généré par un serveur autoritaire associé à un identifiant de nommage et est propre à chaque serveur hébergeant des ressources auprès duquel une fonction de résolution d'un identifiant de nommage est déléguée. Ainsi, seul un serveur hébergeant des ressources autorisé par un serveur autoritaire associé à un identifiant de nommage se voit déléguer la résolution d'identifiant de nommage.

Selon une caractéristique particulière du procédé de résolution d'identifiants de nommage, celui-ci comprend préalablement à l'étape de transmission du paramètre de délégation, une étape de réception d'un message comprenant le paramètre de délégation.

Dans une implémentation particulière du procédé de résolution d'identifiants de nommage, le message reçu est émis par ledit serveur autoritaire associé à au moins un identifiant de nommage.

Ainsi le serveur autoritaire associé à un identifiant de nommage à résoudre transmet directement le paramètre de délégation au serveur hébergeant des ressources concerné.

Dans une implémentation particulière du procédé de résolution d'identifiants de nommage, le message reçu est émis par un résolveur d'identifiants de nommage.

Dans cette implémentation, le résolveur d'identifiants de nommage sensé résoudre un identifiant de nommage particulier relaie un message, transmis par le serveur autoritaire associé à l'identifiant de nommage particulier et comprenant le paramètre de délégation, au serveur hébergeant des ressources concerné. Dans cette implémentation, e résolveur d'identifiants de nommage sensé résoudre un identifiant de nommage particulier est ainsi informé de la délégation de la résolution de l'identifiant de nommage particulier.

L'invention concerne également un procédé de demande de résolution d'au moins un identifiant de nommage selon la revendication 6 Le terminal reçoit, en réponse à une demande d'accès aux ressources hébergées par le serveur hébergeant des ressources, le paramètre de délégation du serveur hébergeant des ressources.

Le terminal vérifie alors l'authenticité de ce paramètre de délégation préalablement à toute résolution d'identifiants de nommage afin de s'assurer de la fiabilité du serveur hébergeant des ressources vis-à-vis de la résolution d'identifiants de nommage.

Lorsque l'authenticité dudit paramètre de délégation n'est pas vérifiée, une étape d'émission d'une demande de résolution de l'identifiant de nommage à destination d'un résolveur d'identifiants de nommage.

Lorsque le terminal détermine que le serveur hébergeant des données n'est pas autorisé à résoudre un identifiant de nommage particulier, le terminal transmet alors une demande de résolution de l'identifiant de nommage en question à un résolveur d'identifiants de nommage dont il est acquis qu'il est autorisé à résoudre les identifiants de nommage.

Selon une implémentation du procédé de demande de résolution d'au moins un identifiant de nommage, celui-ci comprend une étape de réception d'un message, émis par le serveur hébergeant des ressources, comprenant au moins une adresse réseau d'un serveur associé à un identifiant de nommage à résoudre.

Dans cette implémentation du procédé de demande de résolution d'un identifiant de nommage, le serveur hébergeant des ressources fournit une adresse réseau d'un serveur associé à un identifiant de nommage qu'il est autorisé à résoudre sans attendre que le terminal ait vérifié l'authenticité du paramètre de délégation.

Une telle implémentation permet de réduire la durée de traitement de la résolution d'un identifiant de nommage, puisque dès que l'authenticité du paramètre de délégation est vérifiée, le terminal peut accéder à un serveur associé à un identifiant de nommage car il est déjà en possession des adresses réseaux de serveurs associés à un identifiant de nommage.

Selon une autre implémentation du procédé de demande de résolution d'au moins un identifiant de nommage, celui-ci comprend lorsque l'authenticité dudit paramètre de délégation est vérifiée et préalablement à la réception du message comprenant l'adresse réseau d'un serveur associé audit identifiant de nommage à résoudre :
- une étape d'émission d'une demande de résolution de l'identifiant de nommage à destination du serveur hébergeant des ressources.

Dans cette implémentation du procédé de demande de résolution d'un identifiant de nommage, le serveur hébergeant des ressources fournit une adresse réseau d'un serveur associé à un identifiant de nommage qu'il est autorisé à résoudre en réponse à une demande de résolution d'identifiant de nommage émise par le terminal après vérification de l'authenticité du paramètre de délégation.

Selon une particularité du procédé de demande de résolution d'un identifiant de nommage, la vérification de l'authenticité du paramètre de délégation comprend :
- l'émission d'une demande d'informations relatives audit serveur hébergeant des ressources à destination d'un résolveur d'identifiants de nommage,
- la réception d'un message comprenant une clé cryptographique associée à un serveur autoritaire associé à un identifiant de nommage et le paramètre de délégation,
- la vérification du paramètre de délégation transmis par le serveur hébergeant des ressources au moyen de la clé cryptographique et du paramètre de délégation transmis par le résolveur d'identifiant de nommage.

Afin de s'assurer de l'authenticité du paramètre de délégation transmis par le serveur hébergeant des ressources, le terminal interroge un résolveur d'identifiants de nommage qui est considéré comme un équipement fiable.

Selon une particularité du procédé de demande de résolution d'un identifiant de nommage, le paramètre de délégation est une empreinte numérique de l'identifiant de nommage associé audit serveur hébergeant des ressources signée par la clé cryptographique associée à un serveur autoritaire associé à un identifiant de nommage.

L'invention concerne en outre un serveur selon la revendication 9.

Un tel serveur hébergeant des ressources est par exemple un serveur géré par un fournisseur de service internet tel que Orange. Dans ce cas de figure, un exemple de ressources hébergées par un tel serveur est la page d'accueil orange.fr laquelle contient de nombreux liens renvoyant vers d'autres sites internet.

Un autre objet de l'invention concerne un terminal selon la revendication 10.

Un tel terminal est par exemple un ordinateur ou un smartphone, équipé d'un navigateur internet.

L'invention concerne enfin des produits programme d'ordinateur comprenant des instructions de code de programme pour la mise en œuvre des procédés tels que décrits précédemment, lorsqu'ils sont exécutés par un processeur.

L'invention vise également un support d'enregistrement lisible par un ordinateur sur lequel sont enregistrés des programmes d'ordinateur comprenant des instructions de code de programme pour l'exécution des étapes des procédés selon l'invention tels que décrits ci-dessus.

Un tel support d'enregistrement peut être n'importe quelle entité ou dispositif capable de stocker le/les programmes. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que les programmes d'ordinateur qu'il contient sont exécutables à distance. Les programmes selon l'invention peuvent être en particulier téléchargés sur un réseau par exemple le réseau Internet.

Alternativement, le support d'enregistrement peut être un circuit intégré dans lequel les programmes sont incorporés, le circuit étant adapté pour exécuter ou pour être utilisé dans l'exécution des procédés objets de l'invention précités.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****fig. 1****]** : cette figure représente un exemple de scenario de résolution d'identifiants de nommage connu de l'état de l'art,
**[****fig. 2****]** : cette figure représente un système dans lequel les procédés objets de l'invention sont mis en œuvre,
**[****fig. 3****]** : cette figure représente un diagramme d'échanges entre différents équipements de communication impliqués dans l'implémentation des procédés de résolution d'au moins un identifiant de nommage et de demande de résolution d'au moins un identifiant de nommage,
**[****fig. 4****]** : cette figure représente un terminal 10 selon un mode de réalisation de l'invention. Un tel terminal 10 est apte à mettre en œuvre les différents modes de réalisation du procédé de demande de résolution d'un identifiant de nommage,
**[****fig. 5****]** : cette figure représente un serveur hébergeant des ressources apte à mettre en œuvre les différents modes de réalisation du procédé de résolution d'identifiants de nommage.

### Description détaillée de modes de réalisation de l'invention

Le principe général de l'invention repose sur la délégation de la résolution d'identifiants de nommage habituellement effectuée par des résolveurs d'identifiants de nommage à des serveurs hébergeant des ressources, tels que des serveurs web, gérés par exemple par un fournisseur de service internet.

La **[****Fig. 2****]** représente un système dans lequel les procédés objets de l'invention sont mis en œuvre.

Le système comprend au moins un terminal 10 requérant une résolution d'identifiant de nommage, un serveur hébergeant des ressources 14 dont l'identifiant de nommage est par exemple orange.fr, au moins un résolveur d'identifiants de nommage 11, au moins un serveur autoritaire 12 associé à un identifiant de nommage et au moins un serveur 13 associés à un identifiant de nommage à résoudre, ce serveur 13 stockant des données relatives à la mise œuvre d'un service requis par le terminal 10 tel que des données relatives à une page web ou des données relatives à un contenu téléchargeable, etc.

Le terminal 10 peut échanger des messages avec le serveur hébergeant des ressources 14 et avec le résolveur d'identifiants de nommage 11. Un terminal 10 est un équipement pouvant émettre des requêtes pour obtenir du contenu tel qu'un ordinateur personnel, une passerelle domestique, un décodeur de télévision numérique, un smartphone, etc.

Le résolveur d'identifiants de nommage 11 reçoit des messages en provenance du serveur autoritaire 12 et échange des messages avec le serveur hébergeant des ressources 14 et le serveur 13.

Le serveur 13 échange des messages avec le serveur hébergeant des ressources 14 et avec le terminal 10.

Ces divers échanges de messages entre ces différents équipements ainsi que leurs contenus sont expliqués plus en détail dans la suite de ce document.

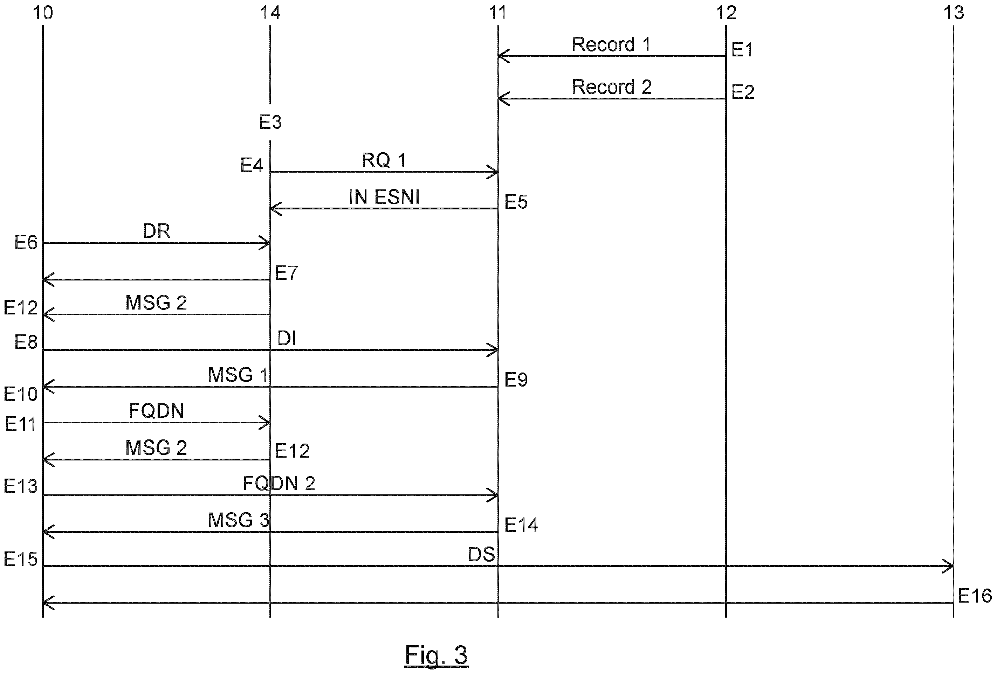

La **[****Fig. 3****]** représente un diagramme d'échanges entre différents équipements de communication impliqués dans l'implémentation des procédés de résolution d'au moins un identifiant de nommage et de demande de résolution d'au moins un identifiant de nommage.

Dans une étape E1, le serveur autoritaire 12 associé à l'identifiant de nommage journal.fr transmet un premier message Record 1 tel que, par exemple, un message de type DNS record comprenant une adresse IP associée au serveur 13 associé à l'identifiant de nommage journal.fr, à destination du résolveur d'identifiant de nommage 11. Un exemple d'un tel message Record 1 est donné ci-dessous :
DNS record journal.fr IN A : 10.1.1.10 où 10.1.1.10 est l'adresse IP associée au server 13 associé à l'identifiant de nommage journal.fr.

Le serveur autoritaire 12 peut transmettre dans un ou plusieurs messages Record 1 les adresses IP de différents serveurs 13 associés à des identifiants de nommage eux-mêmes associés au serveur autoritaire 12.

Le résolveur d'identifiant de nommage 11 stocke ces adresses IP et l'identifiant de nommage associé dans une table de correspondance utilisée lors de la résolution des identifiants de nommages.

Dans une étape E2, le serveur autoritaire 12 associé à l'identifiant de nommage journal.fr transmet un deuxième message Record 2 tel que, par exemple, un message de type DNS record ESNI comprenant une clé cryptographique associée au serveur autoritaire 12 et un paramètre de délégation associé au serveur hébergeant des ressources 14 pour l'identifiant de nommage journal.fr à destination du résolveur d'identifiant de nommage 11. Un exemple d'un tel message Record 2 est donné ci-dessous :

```
   ESNI record journal.fr {
       SNI encryption key: C5E74D
      Trusted_entities : {
          orange.fr_encrypted: 9B5D248 #
       }
```

Le serveur autoritaire 12 transmet pour chacun des identifiants de nommage qui lui sont associés un message Record 2 comprenant la clé cryptographique associée au serveur autoritaire 12 et un paramètre de délégation associé au serveur hébergeant des ressources 14 pour un identifiant de nommage donné comme par exemple sport.com à destination du résolveur d'identifiant de nommage 11.

Un exemple d'un tel message Record 2 est donné ci-dessous :

```
   ESNI record sport.com {
       SNI encryption key: C5E74D
      Trusted_entities : {
          orange.fr_encrypted: A359DA8
       }
```

De manière connue, afin de permettre le chiffrement d'un champ ESNI d'un message TLS *(Transport Loyer Security*) *« ClientHello »* émis par un terminal 10, le serveur autoritaire associé à l'identifiant de nommage FQDN_i calcule une paire de clés cryptographiques privée et publique. Le serveur autoritaire 12 associé à l'identifiant de nommage FQDN_i annonce la clé publique dans un message de type record DNS ESNI à un résolveur d'identifiants de nommage 11. Le terminal obtient cette clé publique du résolveur d'identifiant de nommage 11.

Une fois en possession de la clé publique, le terminal 11 chiffre le champ eSNI du message TLS ClientHello avec cette clé publique. Le message TLS ClientHello est alors transmis à un serveur associé à l'identifiant de nommage FQDN_i Le serveur associé à l'identifiant de nommage FQDN_i déchiffre le message « *TLS ClientHello »* au moyen de la clé privée et transmet un message *« ServerHello TLS »* à destination du terminal 10 afin d'établir une connexion HTTPS entre le serveur associé à l'identifiant de nommage FQDN_i et le terminal 10.

Dans les présents procédés de résolution d'au moins un identifiant de nommage et de demande de résolution d'au moins un identifiant de nommage, le serveur autoritaire 12 chiffre avec la clé privée associée à la clé publique chaque identifiant de nommage associé à un serveur hébergeant des ressources 14 auquel il donne une autorisation d'exécution d'une fonction de résolution d'au moins un identifiant de nommage. Dans l'exemple décrit, la clé publique du serveur autoritaire 12 est C5E74D. Le serveur autoritaire 12 calcule ensuite une empreinte numérique de l'identifiant de nommage associé au serveur hébergeant des ressources 14 signée par la clé cryptographique associée au serveur autoritaire (12). Une telle empreinte numérique est par exemple un hash de la clé publique et de l'identifiant de nommage, orange.fr, associé au serveur hébergeant des ressources 14. Le serveur autoritaire 12 détermine ainsi le paramètre de délégation du serveur hébergeant des ressources 14 pour l'identifiant de nommage journal.fr : 9B5D248 #. Le paramètre de délégation du serveur hébergeant des ressources 14 est transmis dans le champ *« Trusted-entities* » et la clé publique du serveur autoritaire 12 est transmises dans le champ « *SNI encryption* » key du message Record 2 lorsque celui-ci est un de type DNS record ESNI.

Dans un mode de réalisation particulier des procédés de résolution d'au moins un identifiant de nommage et de demande de résolution d'au moins un identifiant de nommage, les différents messages Record 1 et Record 2 sont émis par le serveur autoritaire 12 directement à destination du serveur hébergeant des ressources 14.

Ces étapes E1 et E2 ne déclenchent pas directement les étapes E3 et suivantes, mais doivent leur être préalables afin d'assurer la bonne exécution des procédés de résolution d'au moins un identifiant de nommage et de demande de résolution d'au moins un identifiant de nommage.

Dans une étape E3, le serveur hébergeant des ressources 14 stocke, en cache, des adresses IP des serveurs 13 associés à des identifiants de nommage. Ces informations peuvent être transmises par des serveurs autoritaires 12 associés à des identifiants de nommages.

Au cours d'une étape E4, le serveur hébergeant des ressources 14 émet une requête RQ1 à destination du résolveur d'identifiants de nommage 11 afin d'obtenir un paramètre de délégation relatif à un identifiant de nommage particulier en vue de pourvoir le résoudre. Une telle requête RQ1 est par exemple un message du type DNS query ESNI (*Domain Name System query Encrypted Server Name Indication*) comprenant l'identifiant de nommage pour lequel le paramètre de délégation est requis, ici journal.fr. A réception de cette requête RQ1, le résolveur d'identifiants de nommage 11 émet par exemple un message response ESNI à destination du serveur hébergeant des ressources 14 dans une étape E5 et comprenant le paramètre de délégation requis, ici 9B5D248 #.

Le serveur hébergeant des ressources 14 émet une telle requête RQ1 pour chacun des identifiants de nommage pour lesquels un paramètre de délégation associé au serveur hébergeant des ressources 14 a été généré par le serveur autoritaire.

Un tel message response ESNI comprend entre autres le paramètre de délégation associé au serveur hébergeant des ressources 14 et correspondant à un identifiant de nommage particulier, par exemple journal.fr.

De même, le résolveur 11 émet un message response ESNI pour chacun des identifiants de nommage pour lesquels un paramètre de délégation a été requis par le serveur hébergeant des ressources 14.

Ces étapes E4 et E5 ne déclenchent pas directement les étapes E6 et suivantes, mais doivent leur être préalables afin d'assurer la bonne exécution des procédés de résolution d'au moins un identifiant de nommage et de demande de résolution d'au moins un identifiant de nommage.

Le terminal 10 ayant établi une session de communication avec le serveur hébergeant des ressources 14, il émet, dans une étape E6, une demande de ressources DR à destination du serveur hébergeant des ressources 14. Une telle demande de ressources est par exemple un message du type HTTPS GET resource orange.fr.

En réponse à cette demande de ressources DR, le serveur hébergeant des ressources 14 transmet, dans une étape E7, les ressources requises ainsi qu'une liste comprenant les différents paramètres de délégation associés au serveur hébergeant des ressources 14 et correspondant aux différents identifiants de nommage que le serveur hébergeant des ressources 14 est autorisé à résoudre. Ainsi, pour l'identifiant de nommage journal.fr, le serveur hébergeant des ressources 14 transmet le paramètre de délégation 9B5D248 #, et pour l'identifiant de nommage sport.com, le serveur hébergeant des ressources 14 transmet le paramètre de délégation A359DA8.

Dans un mode de réalisation particulier, l'étape E3 peut être mise en œuvre par le serveur hébergeant des ressources 14 suite à la mise en œuvre de l'étape E7, par exemple si c'est la première fois que le serveur hébergeant des ressources 14 reçoit une demande de ressources du type HTTPS GET resource orange.fr de la part d'un terminal 10, suite à un nettoyage du cache du serveur hébergeant des ressources 14 par exemple.

Les étapes E8 à E10 décrites ci-après constituent une phase de vérification de l'authenticité des paramètres de délégation transmis par le serveur hébergeant des ressources 14.

Ainsi, dans une étape E8, le terminal 10 émet une demande d'informations DI relatives au serveur hébergeant des ressources 14 à destination du résolveur d'identifiants de nommage 11. Une telle demande d'information comprend au moins un identifiant de nommage, par exemple journal.fr, pour lequel le terminal souhaite vérifier le paramètre de délégation associé au serveur hébergeant des données 14. La demande d'information DI est par exemple un message du type DNS query ESNI.

Dans une étape E9, le résolveur d'identifiants de nommage 11 transmet un message MSG1, tel que par exemple un message de type DNS record ESNI, comprenant la clé publique C5E74D associée au serveur autoritaire 12 et le paramètre de délégation 9B5D248 # associé au serveur hébergeant des ressources 14 pour l'identifiant de nommage journal.fr.

Dans cet exemple d'implémentation, à l'issue de l'étape E9, le terminal 10 dispose d'une première version V1 du paramètre de délégation associé au serveur hébergeant des ressources 14 pour l'identifiant de nommage journal.fr qu'il a reçu du serveur hébergeant des ressources 14 au cours de l'étape E7, et d'une deuxième version V2 du paramètre de délégation associé au serveur hébergeant des ressources 14 pour l'identifiant de nommage journal.fr qu'il a reçu du résolveur d'identifiants de nommage 11 au cours de l'étape E9. Cette deuxième version V2 du paramètre de délégation associé au serveur hébergeant des ressources 14 pour l'identifiant de nommage journal.fr est considérée comme fiable car émise par un équipement fiable, à savoir le résolveur d'identifiants de nommage 11.

Au cours d'une étape E10, le terminal 10 vérifie l'authenticité de la première version V1 du paramètre de délégation. Pour cela, le terminal 10 utilise les paramètres de chiffrement ESNI ,tels que par exemple la clé publique C5E74D, associés au serveur autoritaire 12 afin de vérifier l'authenticité de l'empreinte numérique de la première version V1 du paramètre de délégation, il obtient ainsi une première version décryptée DcV1 de l'identifiant de nommage du serveur hébergeant des ressources 14. La première version décryptée DcV1 de l'identifiant de nommage donne « orange.fr ».

Le terminal 10 déchiffre également la deuxième version V2 du paramètre de délégation associé au serveur hébergeant des ressources 14 au moyen de la clé publique, il obtient ainsi une deuxième version décryptée DcV2 de l'identifiant de nommage du serveur hébergeant des ressources 14. Ici, la deuxième version décryptée DcV2 de l'identifiant de nommage ainsi déchiffrée donne « orange.fr ». Le terminal 10 compare ensuite la première version décryptée DcV1 de l'identifiant de nommage du serveur hébergeant des ressources 14 avec la deuxième version décryptée DcV2 de l'identifiant de nommage du serveur hébergeant des ressources 14. Lorsque les deux versions décryptée DcV1 et décryptée DcV2 de l'identifiant de nommage associé au serveur hébergeant des ressources 14 correspondent, l'authenticité du paramètre de délégation associé au serveur hébergeant des ressources 14 pour un identifiant de nommage donné est vérifiée.

Lorsque l'authenticité du paramètre de délégation associé au serveur hébergeant des ressources 14 pour un identifiant de nommage donné est vérifiée, le terminal 10 émet alors, dans une étape E11, une requête en résolution d'identifiants de nommage FQDN à destination du serveur hébergeant des ressources 14. Une telle requête en résolution d'identifiants de nommage FQDN peut comprendre un seul identifiant de nommage à résoudre ou bien l'ensemble des identifiants de nommage pour lesquels le serveur hébergeant des ressources 14 est autorisé à exécuter une fonction de résolution d'identifiants de nommage. Une telle requête en résolution d'identifiants de nommage FQDN est par exemple un message du type DOH query ip comprenant au moins un identifiant de nommage.

Dans une étape E12, le serveur hébergeant des ressources 14 émet un message MSG2 à destination du terminal 10. Le message MSG2 comprend au moins une adresse réseau d'un serveur 13 associé à un identifiant de nommage à résoudre, ce serveur 13 stockant des données relatives à la mise œuvre d'un service requis par le terminal 10.

Dans un mode de réalisation particulier, dit mode "push", des procédés de résolution d'au moins un identifiant de nommage et de demande de résolution d'au moins un identifiant de nommage, l'étape E11 n'est pas mise en œuvre par le terminal 10 et l'étape E12 est mise entre les étapes E7 et E8. Ce mode de réalisation permet de réduire la durée de traitement de la résolution d'un identifiant de nommage, puisque dès que l'authenticité du paramètre de délégation est vérifiée, le terminal 10 peut accéder à un serveur 13 associé à un identifiant de nommage car il est déjà en possession des adresses réseaux de serveurs 13 associés à un identifiant de nommage.

Lorsque les deux versions décryptée DcV1 et décryptée DcV2 de l'identifiant de nommage associé au serveur hébergeant des ressources 14 ne correspondent pas, l'authenticité du paramètre de délégation associé au serveur hébergeant des ressources 14 pour un identifiant de nommage donné n'est pas vérifiée.

Dans une telle situation, le terminal 10 se comporte comme s'il n'avait pas reçu de paramètres de délégation de la part du serveur hébergeant des ressources 14 et émet, au cours d'une étape E13, une requête en résolution d'identifiants de nommage FQDN2 à destination du résolveur d'identifiant de nommage 11 requérant la résolution d'au moins un identifiant de nommage pour lequel le serveur hébergeant des ressources 14 n'est pas autorisé à effectuer une résolution d'identifiant de nommage. Une telle requête en résolution d'identifiants de nommage FQDN2 comprend l'identifiant de nommage à résoudre, par exemple sport.com. Une telle requête en résolution d'identifiants de nommage FQDN2 est par exemple un message du type DOH query ip.

Au cours d'une étape E14, le résolveur d'identifiants de nommage 11 émet un message MSG3 à destination du terminal 10. Le message MSG2 comprend au moins une adresse réseau d'un serveur 13 associé à l'identifiant de nommage à résoudre, ici sport.com.

Dans un mode de réalisation particulier, la fonction de résolution d'identifiants de nommage peut être limitée uniquement aux identifiants de nommage de contenus référencés dans les ressources hébergées par le serveur hébergeant des ressources 14. Ainsi, le terminal 10 peut rejeter les résolutions de certains identifiants de nommage pour lesquels le serveur hébergeant des ressources 14 possède une délégation de résolution mais dont les contenus ne sont pas hébergés par le serveur hébergeant des ressources 14. Par exemple, le serveur hébergeant des ressources 14 possède une délégation pour résoudre l'identifiant de nommage replay.fr mais le contenu associé à cet identifiant de nommage replay.fr n'est référencé parmi les ressources hébergées par le serveur hébergeant des ressources 14 ; dans ce cas de figure, le terminal 10 ne transmet pas de demande de résolution d'identifiant de nommage à destination du hébergeant des ressources 14 pour l'identifiant de nommage replay.fr.

Dans une étape E15, le terminal 10 émet une demande de ressources DS auprès d'un serveur 13 afin d'obtenir des données relatives à la mise œuvre d'un service requis par le terminal 10. Une telle demande d'établissement d'une session de communication DS est par exemple un message du type GET journal.fr content from @ip_journal.fr.

En réponse à cette demande de ressources DS, le serveur 13 fournit la ressource requise au cours d'une étape E16.

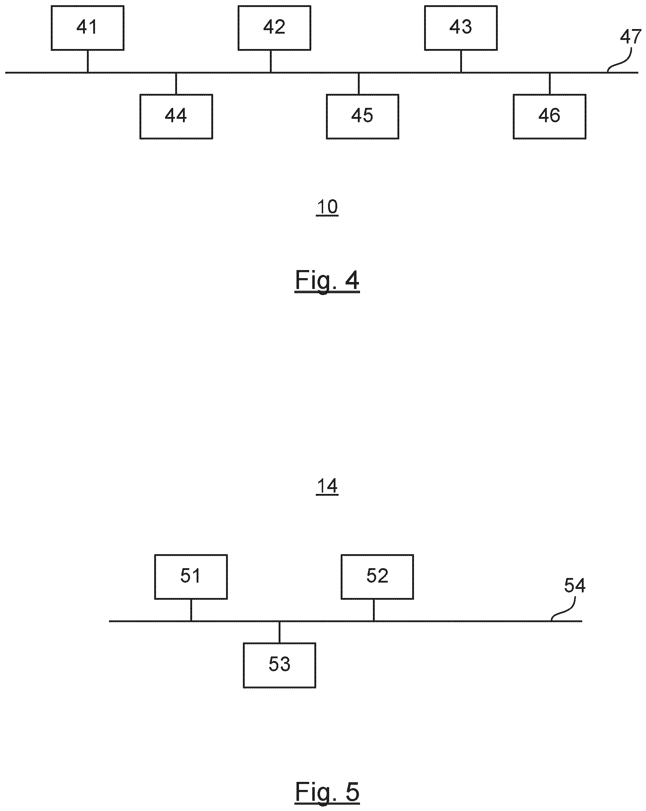

La **[****fig. 4****]** représente un terminal 10 selon un mode de réalisation de l'invention. Un tel terminal 10 est apte à mettre en œuvre les différents modes de réalisation du procédé de demande de résolution d'un identifiant de nommage selon la figure 3.

Un terminal 10 peut comprendre au moins un processeur matériel 41, une unité de stockage 42, un dispositif de saisie 43, un dispositif d'affichage 44, une interface 45, et au moins une interface de réseau 46 qui sont connectés entre eux au travers d'un bus 47. Bien entendu, les éléments constitutifs du terminal 10 peuvent être connectés au moyen d'une connexion autre qu'un bus.

Le processeur 41 commande les opérations du terminal 10. L'unité de stockage 42 stocke au moins un programme pour la mise en œuvre du procédé selon un mode de réalisation de l'invention à exécuter par le processeur 41, et diverses données, telles que des paramètres utilisés pour des calculs effectués par le processeur 41, des données intermédiaires de calculs effectués par le processeur 41, etc. Le processeur 41 peut être formé par tout matériel ou logiciel connu et approprié, ou par une combinaison de matériel et de logiciel. Par exemple, le processeur 41 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 42 peut être formée par n'importe quel moyen approprié capable de stocker le programme ou les programmes et des données d'une manière lisible par un ordinateur. Des exemples d'unité de stockage 42 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 43 peut être formé par un clavier, un dispositif de pointage tel qu'une souris à utiliser par un utilisateur pour entrer des commandes. Le dispositif d'affichage 504 peut être également formé par un module d'affichage, tel que par exemple une interface graphique utilisateur ou GUI (pour *Graphical User Interface*).

L'interface 45 fournit une interface entre le terminal 10 et un autre équipement.

Au moins une interface réseau 46 fournit une connexion entre le terminal 10 et le serveur hébergeant des ressources 14, le résolveur 11 et les serveurs 13.

La **[****fig. 5****]** représente un serveur hébergeant des ressources 14 apte à mettre en œuvre les différents modes de réalisation du procédé de résolution d'identifiants de nommage selon la figure 3.

Un serveur hébergeant des ressources 14 peut comprendre au moins un processeur matériel 51, une unité de stockage 52, et au moins une interface de réseau 53 qui sont connectés entre eux au travers d'un bus 54. Bien entendu, les éléments constitutifs du serveur hébergeant des ressources 14 peuvent être connectés au moyen d'une connexion autre qu'un bus.

Le processeur 51 commande les opérations du serveur hébergeant des ressources 14. L'unité de stockage 52 stocke au moins un programme pour la mise en œuvre de la méthode selon un mode de réalisation à exécuter par le processeur 51, et diverses données, telles que des paramètres utilisés pour des calculs effectués par le processeur 51, des données intermédiaires de calculs effectués par le processeur 51, etc. Le processeur 51 peut être formé par tout matériel ou logiciel connu et approprié, ou par une combinaison de matériel et de logiciel. Par exemple, le processeur 51 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 52 peut être formée par n'importe quel moyen approprié capable de stocker le programme ou les programmes et des données d'une manière lisible par un ordinateur. Des exemples d'unité de stockage 52 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Au moins une interface réseau 53 fournit une connexion entre le serveur hébergeant des ressources 14, le résolveur 11, le terminal 10 et le serveur autoritaire 12.

## Revendications

1. Procédé de résolution d'au moins un identifiant de nommage, ledit procédé étant mis en œuvre par un serveur hébergeant des ressources (14) auxquelles peut accéder au moins un terminal (10), et comprenant les étapes suivantes :
- réception (E6) d'une demande de ressources (DR) émise par le terminal (10),
- en réponse à la demande de ressources (DR), transmission (E7), à destination du terminal des ressources requises et d'un message comprenant au moins un paramètre, dit paramètre de délégation, relatif à une autorisation d'exécution par ledit serveur hébergeant des ressources (14) d'une fonction de résolution d'au moins un identifiant de nommage, ledit paramètre de délégation ayant été généré par un serveur autoritaire associé à un identifiant de nommage et étant propre à chaque serveur hébergeant des ressources auprès duquel une fonction de résolution d'un identifiant de nommage est déléguée,
- réception (E11) d'une requête en résolution d'au moins un identifiant de nommage transmise par ledit terminal(10), **,** lorsque l'authenticité dudit paramètre de délégation est vérifiée par le terminal;
- transmission (E12), à destination du terminal (10), d'au moins une adresse réseau d'un serveur (13, 14) associé à l'identifiant de nommage à résoudre.

2. Procédé de résolution d'au moins un identifiant de nommage selon la revendication 1 dans lequel, le paramètre de délégation est une empreinte numérique de l'identifiant de nommage associé audit serveur hébergeant des ressources (14) signée par une clé cryptographique associée à un serveur autoritaire (12) associé à au moins un identifiant de nommage.

3. Procédé de résolution d'au moins un identifiant de nommage selon la revendication 1 comprenant préalablement à l'étape de transmission (E7) du paramètre de délégation, une étape de réception (E5, E2) d'un message comprenant le paramètre de délégation.

4. Procédé de résolution d'au moins un identifiant de nommage selon la revendication 3 dans lequel le message reçu est émis par ledit serveur autoritaire (12) associé à au moins un identifiant de nommage.

5. Procédé de résolution d'au moins un identifiant de nommage selon la revendication 3 dans lequel le message reçu est émis par un résolveur d'identifiants de nommage (11).

6. Procédé de demande de résolution d'au moins un identifiant de nommage, ledit procédé étant mis en œuvre par un terminal (10) et comprenant les étapes suivantes :
- émission (E6) d'une demande de ressources (DR) à destination d'un serveur hébergeant des ressources (14) auxquelles peut accéder le terminal (10),
- réception (E7) des ressources requises et d'un message, émis par le serveur hébergeant des ressources (14) , comprenant au moins un paramètre, dit paramètre de délégation, relatif à une autorisation d'exécution par ledit serveur hébergeant des ressources (14) d'une fonction de résolution d'au moins un identifiant de nommage, ledit paramètre de délégation ayant été généré par un serveur autoritaire associé à un identifiant de nommage et étant propre à chaque serveur hébergeant des ressources auprès duquel une fonction de résolution d'un identifiant de nommage est déléguée,
- vérification (E8, E9, E10) de l'authenticité dudit paramètre de délégation,
- lorsque l'authenticité dudit paramètre de délégation est vérifiée, transmission (E11) d'une requête en résolution d'au moins un identifiant de nommage à destination du serveur hébergeant des ressources (14),
- transmission (E15) d'une demande de ressource (DS) à destination d'un serveur (13) associé à l'identifiant de nommage à résoudre et dont une adresse réseau est fournie par le serveur hébergeant des ressources (14) en réponse à la requête en résolution d'au moins un identifiant de nommage.

7. Procédé de demande de résolution d'au moins un identifiant de nommage selon la revendication 6 lequel la vérification de l'authenticité du paramètre de délégation comprend :
- l'émission (E8) d'une demande d'informations relatives audit serveur hébergeant des ressources (14) à destination d'un résolveur d'identifiants de nommage (11),
- la réception (E9) d'un message comprenant une clé cryptographique associée à un serveur autoritaire (12) associé à un identifiant de nommage et le paramètre de délégation,
- la vérification (E10) du paramètre de délégation transmis par le serveur hébergeant des ressources (14) au moyen de la clé cryptographique et du paramètre de délégation transmis par le résolveur d'identifiant de nommage (11).

8. Procédé de demande de résolution d'au moins un identifiant de nommage selon la revendication 7 dans lequel le paramètre de délégation est une empreinte numérique de l'identifiant de nommage associé audit serveur hébergeant des ressources (14) signée par la clé cryptographique associée à un serveur autoritaire (12) associé à un identifiant de nommage.

9. Serveur hébergeant des ressources (14) auxquelles peut accéder au moins un terminal (10), ledit serveur hébergeant des données (10) étant autorisé à résoudre au moins un identifiant de nommage, et comprenant des moyens pour :
- recevoir une demande de ressources (DR) émise par le terminal (10),
- en réponse à la demande de ressources (DR), transmettre, à destination du terminal (10) les ressources requises et un message comprenant au moins un paramètre, dit paramètre de délégation, relatif à une autorisation d'exécution par ledit serveur hébergeant des ressources (14) d'une fonction de résolution d'au moins un identifiant de nommage, ledit paramètre de délégation ayant été généré par un serveur autoritaire associé à un identifiant de nommage et étant propre à chaque serveur hébergeant des ressources auprès duquel une fonction de résolution d'un identifiant de nommage est déléguée,
- réception (E11) d'une requête en résolution d'au moins un identifiant de nommage transmise par ledit terminal(10), lorsque l'authenticité dudit paramètre de délégation est vérifiée par le terminal; - transmettre, à destination du terminal (10), au moins une adresse réseau d'un serveur (13, 14) associé à l'identifiant de nommage à résoudre.

10. Terminal (10) requérant une résolution d'au moins un identifiant de nommage, comprenant des moyens pour :
- émettre une demande de ressources (DR) à destination d'un serveur hébergeant des ressources (14) auxquelles peut accéder le terminal (10),
- recevoir les ressources requises et un message, émis par le serveur hébergeant des ressources (14), comprenant au moins un paramètre, dit paramètre de délégation, relatif à une autorisation d'exécution par ledit serveur hébergeant des ressources (14) d'une fonction de résolution d'au moins un identifiant de nommage, ledit paramètre de délégation ayant été généré par un serveur autoritaire associé à un identifiant de nommage et étant propre à chaque serveur hébergeant des ressources auprès duquel une fonction de résolution d'un identifiant de nommage est déléguée,
- vérifier l'authenticité dudit paramètre de délégation,
- lorsque l'authenticité dudit paramètre de délégation est vérifiée, transmettre une requête en résolution d'au moins un identifiant de nommage à destination du serveur hébergeant des ressources (14),
- transmettre une demande de ressource (DS) à destination d'un serveur (13) associé à l'identifiant de nommage à résoudre et dont une adresse réseau est fournie par le serveur hébergeant des ressources (14) en réponse à la requête en résolution d'au moins un identifiant de nommage.

11. Produit programme d'ordinateur comprenant des instructions de code de programme pour la mise en œuvre d'un procédé selon la revendication 1, lorsqu'il est exécuté par un processeur.

12. Produit programme d'ordinateur comprenant des instructions de code de programme pour la mise en œuvre d'un procédé selon la revendication 6, lorsqu'il est exécuté par un processeur.

## Patentansprüche

1. Verfahren zur Auflösung mindestens einer Namensbezeichnung, wobei das Verfahren von einem Server (14), der Ressourcen hostet, auf die mindestens ein Endgerät (10) zugreifen kann, implementiert wird und die folgenden Schritte beinhaltet:
- Empfangen (E6) einer Ressourcenforderung (DR), die von dem Endgerät (10) gesendet wird,
- als Reaktion auf die Ressourcenforderung (DR), Übertragen (E7), an das Endgerät, der angeforderten Ressourcen und einer Nachricht, die mindestens einen Parameter, als Delegationsparameter bezeichnet, beinhaltet, der sich auf eine Autorisierung zur Ausführung, durch den Ressourcen hostenden Server (14), einer Funktion zur Auflösung mindestens einer Namensbezeichnung bezieht, wobei der Delegationsparameter von einem autorisierenden Server, der mit einer Namensbezeichnung assoziiert, generiert wurde und für jeden Ressourcen hostenden Server, an den eine Funktion zur Auflösung einer Namensbezeichnung delegiert wird, spezifisch ist,
- Empfangen (E11) einer Anforderung zur Auflösung mindestens einer Namensbezeichnung, die von dem Endgerät (10) übertragen wird, wenn die Authentizität des Delegationsparameters von dem Endgerät verifiziert wird;
- Übertragen (E12), an das Endgerät (10), mindestens einer Netzwerkadresse eines Servers (13, 14), der mit der aufzulösenden Namensbezeichnung assoziiert ist.

2. Verfahren zur Auflösung mindestens einer Namensbezeichnung nach Anspruch 1, wobei der Delegationsparameter ein digitaler Fingerabdruck der mit dem Ressourcen hostenden Server (14) assoziierten Namensbezeichnung ist, der von einem kryptographischen Schlüssel signiert ist, der mit einem autorisierenden Server (12) assoziiert ist, der mit mindestens einer Namensbezeichnung assoziiert ist.

3. Verfahren zur Auflösung mindestens einer Namensbezeichnung nach Anspruch 1, das vor dem Schritt des Übertragens (E7) des Delegationsparameters einen Schritt des Empfangens (E5, E2) einer Nachricht beinhaltet, die den Delegationsparameter beinhaltet.

4. Verfahren zur Auflösung mindestens einer Namensbezeichnung nach Anspruch 3, wobei die empfangene Nachricht von dem autorisierenden Server (12) gesendet wird, der mit mindestens einer Namensbezeichnung assoziiert ist.

5. Verfahren zur Auflösung mindestens einer Namensbezeichnung nach Anspruch 3, wobei die empfangene Nachricht von einem Auflöser für Namensbezeichnungen (11) gesendet wird.

6. Verfahren zur Forderung einer Auflösung mindestens einer Namensbezeichnung, wobei das Verfahren von einem Endgerät (10) implementiert wird und die folgenden Schritte beinhaltet:
- Senden (E6) einer Ressourcenforderung (DR) an einen Server (14), der Ressourcen hostet, auf die das Endgerät (10) zugreifen kann,
- Empfangen (E7) der angeforderten Ressourcen und einer Nachricht, die von dem Ressourcen hostenden Server (14) gesendet wird und mindestens einen Parameter, als Delegationsparameter bezeichnet, beinhaltet, der sich auf eine Autorisierung zur Ausführung, durch den Ressourcen hostenden Server (14), einer Funktion zur Auflösung mindestens einer Namensbezeichnung bezieht, wobei der Delegationsparameter von einem autorisierenden Server, der mit einer Namensbezeichnung assoziiert, generiert wurde und für jeden Ressourcen hostenden Server, an den eine Funktion zur Auflösung einer Namensbezeichnung delegiert wird, spezifisch ist,
- Verifizieren (E8, E9, E10) der Authentizität des Delegationsparameters,
- wenn die Authentizität des Delegationsparameters verifiziert wird, Übertragen (E11) einer Anforderung zur Auflösung mindestens einer Namensbezeichnung an den Ressourcen hostenden Server (14),
- Übertragen (E15) einer Ressourcenforderung (DS) an einen Server (13), der mit der aufzulösenden Namensbezeichnung assoziiert ist und dessen Netzwerkadresse von dem Ressourcen hostenden Server (14) als Reaktion auf die Anforderung zur Auflösung mindestens einer Namensbezeichnung bereitgestellt wird.

7. Verfahren zur Forderung einer Auflösung mindestens einer Namensbezeichnung nach Anspruch 6, wobei die Verifizierung der Authentizität des Delegationsparameters Folgendes beinhaltet:
- Senden (E8) einer Forderung nach Informationen über den Ressourcen hostenden Server (14) an einen Auflöser für Namensbezeichnungen (11),
- Empfangen (E9) einer Nachricht, die einen kryptographischen Schlüssel, der mit einem autorisierenden Server (12) assoziiert ist, der mit einer Namensbezeichnung assoziiert ist, und den Delegationsparameter beinhaltet,
- Verifizieren (E10) des durch den Ressourcen hostenden Server (14) übertragenen Delegationsparameters mit Hilfe des kryptographischen Schlüssels und des durch den Auflöser für Namensbezeichnungen (11) übertragenen Delegationsparameters.

8. Verfahren zur Forderung einer Auflösung mindestens einer Namensbezeichnung nach Anspruch 7, wobei der Delegationsparameter ein digitaler Fingerabdruck der mit dem Ressourcen hostenden Server (14) assoziierten Namensbezeichnung ist, der von einem kryptographischen Schlüssel signiert ist, der mit einem autorisierenden Server (12) assoziiert ist, der mit einer Namensbezeichnung assoziiert ist.

9. Server (14), der Ressourcen hostet, auf die mindestens ein Endgerät (10) zugreifen kann, wobei der Daten hostende Server (10) dazu autorisiert ist, mindestens eine Namensbezeichnung aufzulösen, und Mittel für Folgendes beinhaltet:
- Empfangen einer Ressourcenforderung (DR), die von dem Endgerät (10) gesendet wird,
- als Reaktion auf die Ressourcenforderung (DR), Übertragen, an das Endgerät (10), der angeforderten Ressourcen und einer Nachricht, die mindestens einen Parameter, als Delegationsparameter bezeichnet, beinhaltet, der sich auf eine Autorisierung zur Ausführung, durch den Ressourcen hostenden Server (14), einer Funktion zur Auflösung mindestens einer Namensbezeichnung bezieht, wobei der Delegationsparameter von einem autorisierenden Server, der mit einer Namensbezeichnung assoziiert, generiert wurde und für jeden Ressourcen hostenden Server, an den eine Funktion zur Auflösung einer Namensbezeichnung delegiert wird, spezifisch ist,
- Empfangen (E11) einer Anforderung zur Auflösung mindestens einer Namensbezeichnung, die von dem Endgerät (10) übertragen wird, wenn die Authentizität des Delegationsparameters von dem Endgerät verifiziert wird;
- Übertragen, an das Endgerät (10), mindestens einer Netzwerkadresse eines Servers (13, 14), der mit der aufzulösenden Namensbezeichnung assoziiert ist.

10. Endgerät (10), das eine Auflösung mindestens einer Namensbezeichnung anfordert und Mittel für Folgendes beinhaltet:
- Senden einer Ressourcenforderung (DR) an einen Server (14), der Ressourcen hostet, auf die das Endgerät (10) zugreifen kann,
- Empfangen der angeforderten Ressourcen und einer Nachricht, die von dem Ressourcen hostenden Server (14) gesendet wird und mindestens einen Parameter, als Delegationsparameter bezeichnet, beinhaltet, der sich auf eine Autorisierung zur Ausführung, durch den Ressourcen hostenden Server (14), einer Funktion zur Auflösung mindestens einer Namensbezeichnung bezieht, wobei der Delegationsparameter von einem autorisierenden Server, der mit einer Namensbezeichnung assoziiert, generiert wurde und für jeden Ressourcen hostenden Server, an den eine Funktion zur Auflösung einer Namensbezeichnung delegiert wird, spezifisch ist,
- Verifizieren der Authentizität des Delegationsparameters,
- wenn die Authentizität des Delegationsparameters verifiziert wird, Übertragen einer Anforderung zur Auflösung mindestens einer Namensbezeichnung an den Ressourcen hostenden Server (14),
- Übertragen einer Ressourcenforderung (DS) an einen Server (13), der mit der aufzulösenden Namensbezeichnung assoziiert ist und dessen Netzwerkadresse von dem Ressourcen hostenden Server (14) als Reaktion auf die Anforderung zur Auflösung mindestens einer Namensbezeichnung bereitgestellt wird.

11. Computerprogrammprodukt, das Programmcodeanweisungen beinhaltet, die bei seiner Ausführung durch einen Prozessor ein Verfahren nach Anspruch 1 implementieren.

12. Computerprogrammprodukt, das Programmcodeanweisungen beinhaltet, die bei seiner Ausführung durch einen Prozessor ein Verfahren nach Anspruch 6 implementieren.

## Claims

1. Method for resolving at least one naming identifier, said method being implemented by a server hosting resources (14) able to be accessed by at least one terminal (10), and comprising the following steps:
- receiving (E6) a resources request (DR) sent by the terminal (10),
- in response to the resources request (DR), transmitting (E7), to the terminal, the requested resources and a message comprising at least one parameter, referred to as delegation parameter, relating to authorization for said server hosting resources (14) to execute a function for resolving at least one naming identifier, said delegation parameter having been generated by an authoritative server associated with a naming identifier and being specific to each server hosting resources to which a function for resolving a naming identifier is delegated,
- receiving (E11) a request to resolve at least one naming identifier, transmitted by said terminal (10), when the authenticity of said delegation parameter is verified by the terminal;
- transmitting (E12), to the terminal (10), at least one network address of a server (13, 14) associated with the naming identifier to be resolved.

2. Method for resolving at least one naming identifier according to Claim 1, wherein the delegation parameter is a digital fingerprint of the naming identifier associated with said server hosting resources (14), signed by a cryptographic key associated with an authoritative server (12) associated with at least one naming identifier.

3. Method for resolving at least one naming identifier according to Claim 1, comprising, prior to the step (E7) of transmitting the delegation parameter, a step (E5, E2) of receiving a message comprising the delegation parameter.

4. Method for resolving at least one naming identifier according to Claim 3, wherein the received message is sent by said authoritative server (12) associated with at least one naming identifier.

5. Method for resolving at least one naming identifier according to Claim 3, wherein the received message is sent by a naming identifier resolver (11).

6. Method for requesting resolution of at least one naming identifier, said method being implemented by a terminal (10) and comprising the following steps:
- sending (E6) a resources request (DR) to a server hosting resources (14) able to be accessed by the terminal (10),
- receiving (E7) the requested resources and a message, sent by the server hosting resources (14), comprising at least one parameter, referred to as delegation parameter, relating to authorization for said server hosting resources (14) to execute a function for resolving at least one naming identifier, said delegation parameter having been generated by an authoritative server associated with a naming identifier and being specific to each server hosting resources to which a function for resolving a naming identifier is delegated,
- verifying (E8, E9, E10) the authenticity of said delegation parameter,
- when the authenticity of said delegation parameter is verified, transmitting (E11) a request to resolve at least one naming identifier to the server hosting resources (14),
- transmitting (E15) a resource request (DS) to a server (13) associated with the naming identifier to be resolved and for which a network address is provided by the server hosting resources (14) in response to the request to resolve at least one naming identifier.

7. Method for requesting resolution of at least one naming identifier according to Claim 6, wherein verifying the authenticity of the delegation parameter comprises:
- sending (E8) a request for information relating to said server hosting resources (14) to a naming identifier resolver (11),
- receiving (E9) a message comprising a cryptographic key associated with an authoritative server (12) associated with a naming identifier and the delegation parameter,
- verifying (E10) the delegation parameter transmitted by the server hosting resources (14) by way of the cryptographic key and the delegation parameter transmitted by the naming identifier resolver (11).

8. Method for requesting resolution of at least one naming identifier according to Claim 7, wherein the delegation parameter is a digital fingerprint of the naming identifier associated with said server hosting resources (14), signed by the cryptographic key associated with an authoritative server (12) associated with a naming identifier.

9. Server hosting resources (14) able to be accessed by at least one terminal (10), said server hosting data (10) being authorized to resolve at least one naming identifier, and comprising means for:
- receiving a resources request (DR) sent by the terminal (10),
- in response to the resources request (DR), transmitting, to the terminal (10), the requested resources and a message comprising at least one parameter, referred to as delegation parameter, relating to authorization for said server hosting resources (14) to execute a function for resolving at least one naming identifier, said delegation parameter having been generated by an authoritative server associated with a naming identifier and being specific to each server hosting resources to which a function for resolving a naming identifier is delegated,
- receiving (E11) a request to resolve at least one naming identifier, transmitted by said terminal (10), when the authenticity of said delegation parameter is verified by the terminal;
- transmitting, to the terminal (10), at least one network address of a server (13, 14) associated with the naming identifier to be resolved.

10. Terminal (10) requesting resolution of at least one naming identifier, comprising means for:
- sending a resource request (DR) to a server hosting resources (14) able to be accessed by the terminal (10),
- receiving the requested resources and a message, sent by the server hosting resources (14), comprising at least one parameter, referred to as delegation parameter, relating to authorization for said server hosting resources (14) to execute a function for resolving at least one naming identifier, said delegation parameter having been generated by an authoritative server associated with a naming identifier and being specific to each server hosting resources to which a function for resolving a naming identifier is delegated,
- verifying the authenticity of said delegation parameter,
- when the authenticity of said delegation parameter is verified, transmitting a request to resolve at least one naming identifier to the server hosting resources (14),
- transmitting a resource request (DS) to a server (13) associated with the naming identifier to be resolved and for which a network address is provided by the server hosting resources (14) in response to the request to resolve at least one naming identifier.

11. Computer program product comprising program code instructions for implementing a method according to Claim 1 when it is executed by a processor.

12. Computer program product comprising program code instructions for implementing a method according to Claim 6 when it is executed by a processor.
